(19) Europäisches Patentamt
European Patent Office
Office européen des brevets

(11) EP 4 507 442 A1

(12) **EUROPEAN PATENT APPLICATION**

(43) Date of publication:
**12.02.2025 Bulletin 2025/07**

(21) Application number: **24185690.5**

(22) Date of filing: **01.07.2024**

(51) International Patent Classification (IPC):
*H04W 74/0833* (2024.01)   *H04W 72/21* (2023.01)
*H04W 74/00* (2009.01)

(52) Cooperative Patent Classification (CPC):
**H04W 74/0833;** H04W 72/21; H04W 74/006

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 US 202363531858 P**

(71) Applicant: **Nokia Technologies Oy
02610 Espoo (FI)**

(72) Inventors:
• **MARCONE, Alessio
Munich (DE)**
• **MASO, Marco
Issy les Moulineaux (FR)**

(74) Representative: **Nokia EPO representatives
Nokia Technologies Oy
Karakaari 7
02610 Espoo (FI)**

(54) **PHYSICAL RANDOM ACCESS CHANNEL OCCASION DETERMINATION FOR MULTIPLE PHYSICAL RANDOM ACCESS CHANNEL TRANSMISSIONS**

(57)   Systems, methods, apparatuses, and computer program products for physical random access channel (PRACH) occasion (RO) determination for multiple PRACH transmissions. A method may include receiving, from a network element, a configuration of one or more values for multiple physical random access channel transmissions. The method may also include determining, based on the configuration, a value of the one or more values for multiple physical random access channel transmissions. The method may further include mapping at least one physical random access channel occasion within a reference time period to at least one value of the one or more values for multiple physical random access channel transmissions. In addition, the method may include transmitting, based on the mapping, the determined value for multiple physical random access channel transmissions.

FIG. 4

EP 4 507 442 A1

Processed by Luminess, 75001 PARIS (FR)

**Description**

**FIELD:**

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to apparatuses, systems, and/or methods for physical random access channel (PRACH) occasion (RO) determination for multiple PRACH transmissions.

**BACKGROUND:**

Examples of mobile or wireless telecommunication systems may include the Universal Mobile Telecommunications System (UMTS) Terrestrial Radio Access Network (UTRAN), LTE Evolved UTRAN (E-UTRAN), LTE-Advanced (LTE-A), MulteFire, LTE-A Pro, fifth generation (5G) radio access technology or NR access technology, and/or 5G-Advanced. 5G wireless systems refer to the next generation (NG) of radio systems and network architecture. 5G network technology is mostly based on NR technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the IoT.

**SUMMARY:**

Some example embodiments may be directed to a method. The method may include receiving, from a network element, a configuration of one or more values for multiple physical random access channel transmissions. The method may also include determining, based on the configuration, a value of the one or more values for multiple physical random access channel transmissions. The method may further include mapping at least one physical random access channel occasion within a reference time period to at least one value of the one or more values for multiple physical random access channel transmissions. In addition, the method may include transmitting, based on the mapping, the determined value for multiple physical random access channel transmissions.

Other example embodiments may be directed to an apparatus. The apparatus may include at least one processor and at least one memory including computer program code. The at least one memory and the computer program code may be configured to, with the at least one processor, cause the apparatus at least to receive, from a network element, a configuration of one or more values for multiple physical random access channel transmissions. The apparatus may also be caused to determine, based on the configuration, a value of the one or more values for multiple physical random access channel transmissions. The apparatus may further be caused to map at least one physical random access channel occasion within a reference time period to at least one value of the one or more values for multiple physical random access channel transmissions. In addition, the apparatus may be caused to transmit, based on the mapping, the determined value for multiple physical random access channel transmissions.

Other example embodiments may be directed to an apparatus. The apparatus may include means for receiving, from a network element, a configuration of one or more values for multiple physical random access channel transmissions. The apparatus may also include means for determining, based on the configuration, a value of the one or more values for multiple physical random access channel transmissions. The apparatus may further include means for mapping at least one physical random access channel occasion within a reference time period to at least one value of the one or more values for multiple physical random access channel transmissions. In addition, the apparatus may include means for transmitting, based on the mapping, the determined value for multiple physical random access channel transmissions.

In accordance with other example embodiments, a non-transitory computer readable medium may be encoded with instructions that may, when executed in hardware, perform a method. The method may include receiving, from a network element, a configuration of one or more values for multiple physical random access channel transmissions. The method may also include determining, based on the configuration, a value of the one or more values for multiple physical random access channel transmissions. The method may further include mapping at least one physical random access channel occasion within a reference time period to at least one value of the one or more values for multiple physical random access channel transmissions. In addition, the method may include transmitting, based on the mapping, the determined value for multiple physical random access channel transmissions.

Other example embodiments may be directed to a computer program product that performs a method. The method may include receiving, from a network element, a configuration of one or more values for multiple physical random access channel transmissions. The method may also include determining, based on the configuration, a value of the one or more values for multiple physical random access channel transmissions. The method may further include mapping at least one physical random access channel occasion within a reference time period to at least one value of the one or more values for multiple physical random access channel transmissions. In addition, the method may include transmitting, based on the mapping, the determined value for multiple physical random access channel transmissions.

Other example embodiments may be directed to an apparatus that may include circuitry configured to receive, from a network element, a configuration of one or more values for multiple physical random access channel transmissions. The apparatus may also be caused to determine, based on the configuration, a value of the one or more values for multiple physical random access channel transmissions. The apparatus may further be caused to map at least one physical random access channel occasion within a reference time period to at least one value of the one or more values for multiple physical random access channel transmissions. In addition, the apparatus may be caused to transmit, based on the mapping, the determined value for multiple physical random access channel transmissions.

**BRIEF DESCRIPTION OF THE DRAWINGS:**

For proper understanding of example embodiments, reference should be made to the accompanying drawings, wherein:

FIG. 1 illustrates an example signal diagram of a 4-step random access channel (RACH) procedure.
FIG. 2 illustrates an example time-domain resource determination for RACH occasions.
FIG. 3 illustrates an example of synchronization signal block to physical random access channel occasion (RO) mapping.
FIG. 4 illustrates an example RO group determination, according to certain example embodiments.
FIG. 5 illustrates another example RO group determination, according to certain example embodiments.
FIG. 6 illustrates an example of an implementation of a first/starting RO determination, according to certain example embodiments.
FIG. 7 illustrates an example of an alternative implementation of the first/starting RO determination, according to certain example embodiments.
FIG. 8 illustrates an example flow diagram of a method, according to certain example embodiments.
FIG. 9 illustrates a set of apparatuses, according to certain example embodiments.

**DETAILED DESCRIPTION:**

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for physical random access channel (PRACH) occasion (RO) determination for multiple PRACH transmissions.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "base station", "cell", "node", "gNB", "network" or other similar language throughout this specification may be used interchangeably. Additionally, the terms synchronization signal block (SSB) and synchronization signal/physical broadcast channel (SS/PBCH) block throughout this specification may be used interchangeably. Further, "RO group of size N" and the expression "the N ROs over which the UE can perform N PRACH transmissions" may be used interchangeably throughout this specification.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

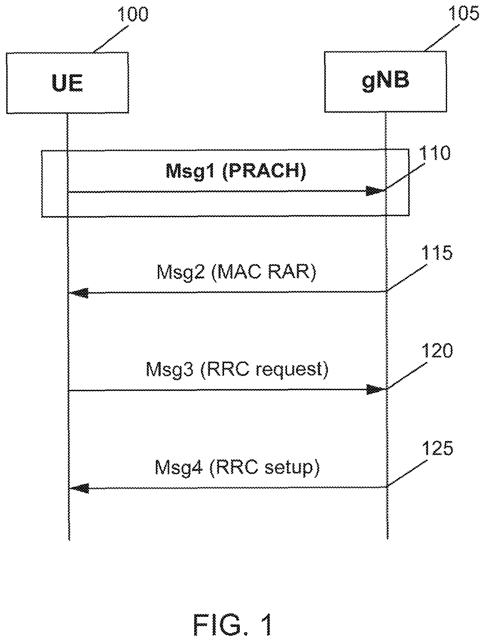

5G NR supports two contention based random access (CBRA) procedures including, for example, a 4-step RACH (Rel-15) and a 2-step RACH (Rel-16). For instance, FIG. 1 illustrates an example 4-step RACH procedure between a UE 100 and a gNB 105. At 110, the UE 100 sends, via Msg1, to the gNB 105 a specific preamble via a PRACH using a specific resource such as, for example, a random access channel (RACH) occasion or RO. At 115, the gNB 105 sends Msg2 to the UE 100 as a reply with a random-access response (RAR) message, which includes a detected preamble ID, a time-advance command, a temporary cell radio network temporary identifier (TC-RNTI), and an uplink (UL) grant for the transmission of Msg3 on a physical uplink shared channel (PUSCH). At 120, the UE 100 responds to Msg2 with Msg3 (radio resource control (RRC) request) over the scheduled PUSCH with an ID for contention resolution. At 125, the gNB 105 transmits, via Msg4 (RRC setup), the contention resolution message to the UE 100 with the contention-resolution ID. Upon reception of Msg4, the UE sends an acknowledgment (ACK) on a physical uplink control channel (PUCCH) if its contention-resolution ID is carried by Msg4.

Although not illustrated in FIG. 1, there may be a preliminary step of sending and receiving an SSB (i.e., downlink (DL) beam sweeping). As a result of the preliminary step, the UE may select an index of a preferred SSB beam, and decode an associated PBCH for a master information block (MIB), a system information block (SIB), etc. The index may also be used by the UE to identify a suitable RO for the preamble transmission (Msg1), according to an SSB-to-RO mapping implicitly conveyed by system information block 1 (SIB1). Although a 4-step RACH is illustrated in FIG. 1, a 2-step RACH may be similar to the 4-step RACH except that Msg1 and Msg3 are combined in a MsgA, and sent out without waiting for feedback from the gNB in between (traditionally Msg2). Similarly, in a 2-step RACH, the gNB combines Msg2 and Msg4 into MsgB. As such, it may be possible to apply the solutions described herein for Msg 1 to the preamble/Msg 1 part of MsgA.

The ROs may be configured in the time domain or the frequency domain. The time domain resource for ROs may be radio resource control (RRC) configured by *prach-ConfigurationIndex* (in *rach-ConfigGeneric*), which acts as an indicator to a row of a table specified in the specifications of the 3$^{rd}$ Generation Partnership Project (3GPP) TS 38.211. With the parameters indicated by *prach-ConfigurationIndex,* the UE may determine the preamble format for PRACH, and apply the procedure specified in 3GPP TS 38.211 to find the ROs in the time domain.

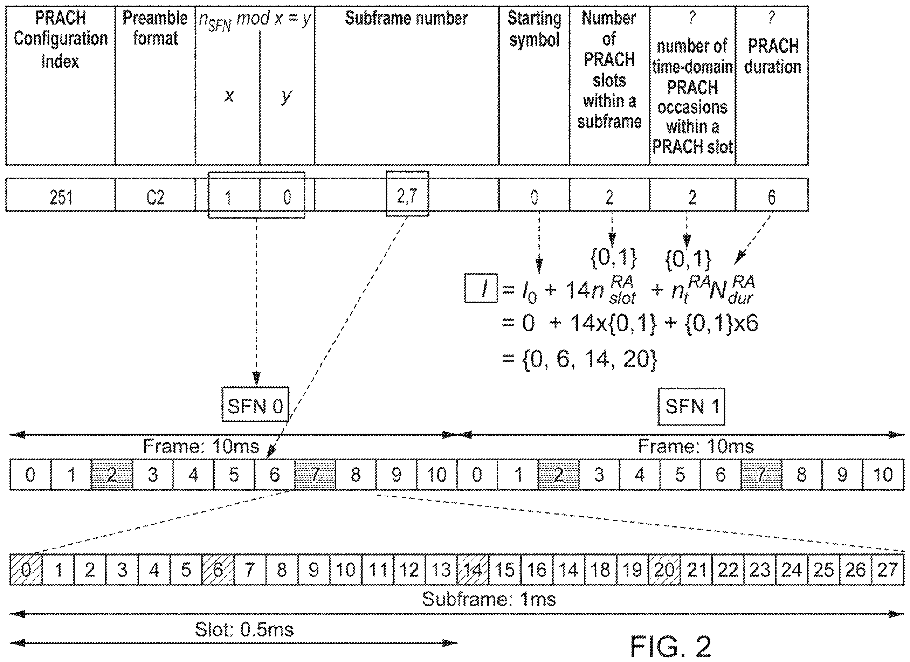

FIG. 2 illustrates an example of time domain resource determination for RACH occasions. As illustrated in FIG. 2, the *prach-ConfigurationIndex* is 251. With this index indicated, the UE may determine that preamble format C2 should be used. The UE may also determine ROs allocated at the system frame numbers ($n_{SFN}$) that satisfy $n_{SFN}$ mod 1 = 0 (i.e., all SFN numbers are valid). Further, within each of the determined SFNs, ROs are allocated at subframe numbers 2 and 7. Within each of the determined subframes, the remaining parameters in the considered row indicate that ROs will start at a symbol number 0, 6, 14, 20. The symbol number may be continuously counted regardless of the number of slots within the subframe, which may depend on the subcarrier spacing configured for PRACH. As illustrated in FIG. 2, the duration of the ROs is 6 symbols, although the actual duration of the preamble format may be less than 6 symbols. Additionally, the validity of the determined ROs may be checked. For example, an RO may be determined as valid if it is within UL symbols, or if it has a sufficient gap after the last SSB/DL symbol when it is within flexible symbols.

In the frequency domain, the parameters *msg1-FrequencyStart* and *msg1-FDM* configured in *RACH-Config-Generic* indicate the offset of the lowest RO in the frequency domain from the start of the UE initial UL bandwidth part, and the number of ROs multiplexed in the frequency domain for each time instance, respectively. The number of ROs multiplexed in the frequency domain may be indexed as $n_{RA} = \{0, 1, ..., M - 1\}$, where $M$ equals the higher-layer parameter *msg1-FDM,* and are numbered in increasing order within the UL bandwidth part, starting from the lowest frequency.

SSB indexes may be mapped to the determined ROs for a UE to understand which ROs are associated to the SSB index(es) selected during the preliminary step before the start of the RACH procedure. The different SSB indexes may be beamformed in different directions in the cell and, thus, selection of a wrong SSB index may result in failure of the RACH procedure.

A parameter *ssb-perRACH-OccasionAndCB-PreamblePerSSB* may be configured in *RACH-ConfigCommon,* and indicate the number of SSB indexes per RO, and the number of contention-based preambles per SSB index. For example, for Type-1 random access procedure, a UE may be provided with a number N of SS/PBCH block indexes associated with one PRACH occasion, and a number R of contention based preambles per SS/PBCH block index per valid PRACH occasion by *ssb-perRACH-OccasionAndCB-PreamblesPerSSB*. Once this information is available to a UE, the UE maps the SSB indexes to the time-frequency grid of ROs (determined as described above) in increasing order of frequency resource indices, time resource indices of the ROs within PRACH slots, and the PRACH slots, sequentially.

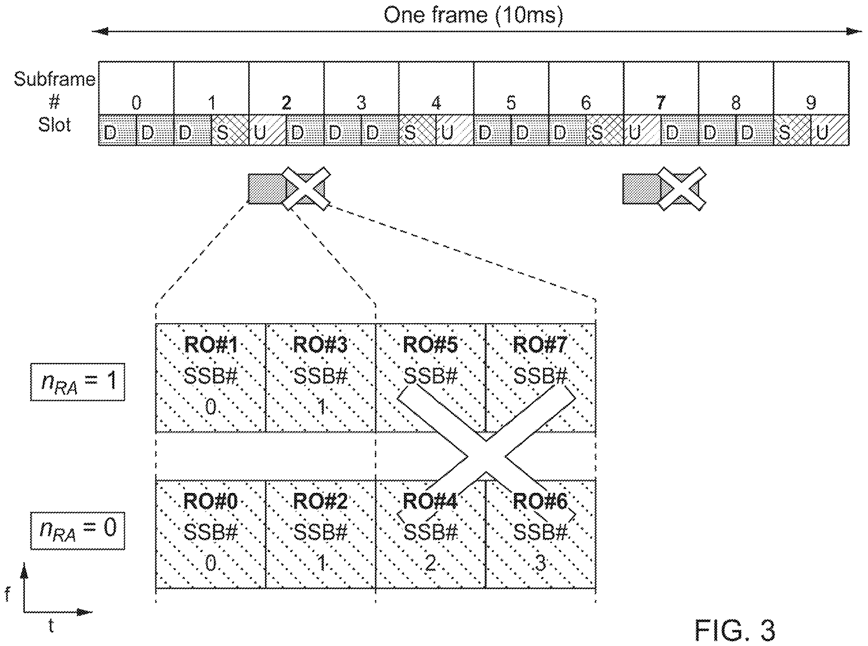

FIG. 3 illustrates an example SSB to RO mapping with *prach-ConfigurationIndex* 251 and UL/DL configuration DDDSU. As illustrated in FIG. 3, DDSU slot structure, *Msg1-FDM* = two, and *ssb-perRACH-OccasionAndCB-PreamblesPerSSB* is one-half. Based on this configuration, two ROs are multiplexed in the frequency domain (*Msg1-FDM* = two), and any two frequency domain multiplexed (FDM) ROs are mapped to the same SSB index (*ssb-perRACH-OccasionAndCB-PreamblesPerSSB* = 1/2).

In relation to the SSB-to-RO mapping, 3GPP defines an association period starting from frame 0 for mapping SSB indexes to PRACH occasions (i.e., ROs) as the smallest value in the set determined by the PRACH configuration period according to Table 1 below. The mapping may be such that all of the SSB indexes are mapped at least once to the ROs within the association period. The PRACH configuration period may be determined at the UE based on the configuration PRACH configuration index. In other words, an association period is a period of time wherein all SSB indexes are mapped to at least one RO.

**Table 1: Mapping between PRACH configuration period and SS/PBCH block to PRACH occasion association period**

| PRACH configuration period (msec) | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

The determined preambles may be used for PRACH transmissions in ROs mapped to certain SSB indexes. The determination may be based on the network configuration of two main relevant parameters including, for example, *ssb-perRACH-OccasionAndCB-PreamblesPerSSB* and *totalNumberOfRA-Preambles.* More specifically, for Type-1 random access procedure, a UE may be provided a number *N* of SSB indexes associated with one RO, and a number *R* of contention based preambles associated to each SSB index per valid PRACH occasion by *ssb-perRACH-OccasionAndCB-PreamblesPerSSB,* and a total number of preambles $N_{preamble}^{total}$ by *totalNumberOfRA-Preambles.*

For Type-1 random access procedure, or for Type-2 random access procedure with a separate configuration of PRACH occasions from Type-1 random access procedure, if *N* < 1, one SS/PBCH block index may be mapped to 1/*N* consecutive valid ROs, and R contention based preambles with consecutive indexes associated with the SS/PBCH block index per valid PRACH occasion start from preamble index 0. If $N \geq 1$, R contention based preambles with consecutive indexes associated with SS/PBCH block index n, $0 \leq n \leq N$ - 1, per valid PRACH occasion start from preamble index $n \cdot N_{preamble}^{total}/N$, wherein $N_{preamble}^{total}$ is an integer multiple of *N.*

For multiple PRACH transmissions with the same transmit (Tx) beam, "RO group" may be assumed for multiple PRACH transmissions with a separate preamble on shared ROs with the ROs for single PRACH transmissions and/or multiple PRACH transmissions on separate ROs with the ROs for single PRACH transmissions, and one RO group may include valid RO(s) for a specific number of multiple PRACH transmissions. All ROs in one RO group may be associated with the same SSB(s), and a shared or separate RO/preamble means that the RO/preamble is shared or separated with a single PRACH transmission. Additionally, if multiple values for the number of multiple PRACH transmission are configured, multiple options may be provided to differentiate between multiple PRACH transmissions with different numbers (i.e., number of PRACH transmissions). For instance, in one option, multiple PRACH transmissions with different numbers may be transmitted on separate ROs. In another option, multiple PRACH transmissions with different numbers may be transmitted with a separate preamble on shared ROs. In these examples, shared or separate RO/preamble means that the RO/preamble is shared or separated between multiple PRACH transmissions with different numbers.

Multiple PRACH transmissions with different numbers (i.e., 2, 4, and 8 PRACH transmissions) may either be transmitted on separate ROs or on shared ROs with separate preambles. When multiple PRACH transmissions are transmitted on shared ROs with separate preambles, two UEs may be transmitting different numbers of multiple PRACH transmissions (e.g., 2 and 8), and may transmit the PRACH repetitions (alternative terminology to multiple PRACH transmissions) in shared (i.e., same) ROs. The UE transmitting 8 PRACH repetitions may share 2 of the 8 ROs with the UE transmitting 2 PRACH repetitions. The two UEs may also use different preambles for their transmissions to avoid cross-interference. When multiple PRACH transmissions are transmitted on separate ROs, UEs transmitting different number of multiple PRACH transmissions may be able to use the same preambles for their transmissions as the multiple PRACH transmissions with different numbers are transmitted on separate ROs and there is no risk of cross-interference.

RO groups may allow a gNB to know which ROs the UE is transmitting multiple PRACH transmissions and blindly combine the multiple PRACH transmissions. In addition, RO groups may have different sizes (i.e., different number of ROs within the group), based on the number of multiple PRACH transmissions the group is used for. The ROs of RO groups of different sizes may be the shared, as long as different preambles are being used for transmission of the PRACH in the different RO groups, or separate. Having RO groups with different sizes (i.e., RO groups for multiple PRACH transmissions with different number) transmitted on separate ROs may create issues for a UE to determine (and for a gNB to know) which ROs to use for a certain RO group size, and which ROs to use for another RO group size to avoid RO groups with different sizes being determined on shared ROs. The support of both options (i.e., RO groups of different sizes on shared and separate ROs) may allow a gNB to optimize the number of RO groups within a certain time period based on available resources and detection capabilities if the gNB is able to indicate to a UE whether both options are being used with the configuration, or if only one of those is active. Thus, according to certain example embodiments, the UE may determine RO groups from valid ROs to perform a number of multiple PRACH repetitions, and the gNB may provide an indication of which of the options to use for the determination of the RO groups.

According to certain example embodiments, the UE may determine RO groups within a reference time period, and the gNB may indicate how RO groups should be determined (i.e., whether on separate ROs only, on shared ROs only, or both on separate and shared ROs). According to other example embodiments, the UE may determine which valid ROs or starting/first RO of RO groups are to be used for a certain RO group size, and the gNB may be enabled to signal an indication of how the RO groups should be determined. According to certain example embodiments described herein, the terminology RO group size is equivalent to a number of multiple PRACH transmissions.

In certain example embodiments, the UE may determine at least one RO. For example, the UE may determine all or part of the valid ROs of RO groups, or a first/starting RO of RO groups, for a number of multiple PRACH transmissions. The determination may be based on a mapping of ROs within a reference time period to one or more number of multiple PRACH transmissions (i.e., to one or more RO groups). In some example embodiments, the reference time period may be one or more association pattern periods. In other example embodiments, the mapping may be performed sequentially first in a time domain, and then in a frequency domain, within the reference time period. The mapping may also be performed starting from the earliest/first RO within the reference time period at the lowest frequency location (i.e., lowest $n_{RA}$) for ROs mapped to a selected SSB index, where $n_{RA}$ is an index that refers to the frequency location of an RO. The mapping may be applicable for a UE that determines RO groups only for one value of the number of multiple PRACH transmissions and for a UE determining RO groups for different numbers of multiple PRACH transmissions.

In other example embodiments, the mapping may be performed sequentially first in the frequency domain and then in the time domain, within the reference time period, starting from the earliest RO within the reference time period at the lowest frequency location (i.e., lowest $n_{RA}$) for a selected SSB index. For instance, in the case RO groups that include multiple ROs in the same time instance and different frequencies cannot be determined, the mapping first in the frequency domain and then in the time domain refers to the first/starting RO of RO groups and/or for a number of multiple PRACH transmissions (i.e., more than one PRACH transmission). In some example embodiments, once the mapping in the frequency domain is concluded, the mapping continues from the lowest $n_{RA}$ and from the next available valid RO within the reference time period for a certain $n_{RA}$. The next available valid RO for a certain $n_{RA}$ is herein defined as a valid RO within the reference time period for a certain $n_{RA}$ at an offset from the previously determined (i.e., determined in frequency domain mapping) starting/first RO given by either the value of the number of multiple PRACH transmissions for the previously determined starting/first RO or by a periodicity value. The periodicity value may be configured and may be different than the value of the number of multiple PRACH transmissions for the previously determined starting/first RO. This example embodiment may be true for both cases of where the UE determines RO groups and/or starting/first ROs only for one value of the number of multiple PRACH transmissions (e.g., either 2 or 4 or 8) and for the UE determining RO groups for different values of the numbers of multiple PRACH transmissions (e.g., any combination of {2, 4, 8} or all of them).

According to certain example embodiments, the mapping may be performed for one value of the number of multiple PRACH transmissions (i.e., for one RO group size). In certain example embodiments, if the gNB configures {2, 4, 8} for the value of the number of multiple PRACH transmissions (i.e., RO group sizes), and the UE determines that it needs to transmit 4 PRACH transmissions, the UE may map ROs to only RO groups of size 4 (or to 4 PRACH transmissions) consecutively, starting from the earliest RO within the reference time period at the lowest $n_{RA}$ value.

According to certain example embodiments, the mapping may be performed across different numbers of multiple PRACH transmissions (i.e., different RO group sizes), and may be in decreasing order of RO group size and each RO may be mapped to only one value (that may be different between the ROs) of multiple PRACH transmissions or to multiple values (that may be different between the ROs) of multiple PRACH transmissions. For example, RO groups of the largest configured size compared to other RO groups may be mapped first, and RO groups of lower sizes may be subsequently mapped. In certain example embodiments, if the gNB configures {2, 4, 8} for the value of the number of multiple PRACH transmissions (i.e., RO group sizes), the UE may first map ROs to the RO groups of size 8 and then to the RO groups of sizes 4 and 2, respectively. The advantage of mapping in decreasing order is that for some PRACH and SSB index configurations, the RO groups of largest size (e.g., 8) may find a suitable number of ROs (e.g., 8) within the reference time period only for lower frequency locations (i.e., lower $n_{RA}$).

According to other example embodiments, the mapping may be performed across different numbers of multiple PRACH transmissions, and may be in increasing order of RO group sizes. For example, RO groups of lowest configured size compared to other RO groups may be mapped first, and RO groups of larger sizes may be subsequently mapped.

In certain example embodiments, the mapping may be performed across different numbers of multiple PRACH transmissions and a number of ROs for a certain $n_{RA}$ are mapped to the largest possible RO group size compared to other RO group sizes, with a size smaller or equal than the number of ROs for the certain $n_{RA}$. For example, if {2, 4, 8} are configured for the value of the number of multiple PRACH transmissions, and for a certain $n_{RA}$ 6 ROs are available, the largest possible RO group size (i.e., number of multiple PRACH transmissions) the 6 ROs may be mapped to may be the one for 4 PRACH transmissions because a value of 6 PRACH transmissions was not configured. As a consequence, the UE may take only 4 ROs out of the 6 for the multiple PRACH transmissions. Each RO may be mapped to only one value (that may be different between the ROs) of multiple PRACH transmissions.

In certain example embodiments, the mapping may be performed across different numbers of multiple PRACH transmissions and a number of ROs for a certain $n_{RA}$ are mapped to all the RO group sizes (all values of the number of multiple PRACH transmissions), with a size smaller or equal than the number of ROs for the certain $n_{RA}$. For example, if {2, 4, 8} are configured for the value of the number of multiple PRACH transmissions, and for a certain $n_{RA}$ 6 ROs are available, the possible RO group sizes (i.e., number of multiple PRACH transmissions) the 6 ROs may be mapped to may be one RO group for 4 PRACH transmissions and up to 3 RO groups for 2 PRACH transmissions, because a value of 6 PRACH transmissions was not configured.

In other example embodiments, if, during the mapping, for a certain $n_{RA}$ value there is a number of remaining/-spare ROs within the reference time period, and such number of remaining/spare ROs is lower than the size of the RO group to be mapped to, the UE does not use the remaining ROs for the certain $n_{RA}$ for the mapping to RO groups (i.e. to number of multiple PRACH transmissions). This example embodiment may be applicable for when the UE determines RO groups only for one of the one or more configured numbers of multiple PRACH transmissions, and when the UE determines RO groups for multiple of the two or more configured numbers of multiple PRACH transmissions. For example, if the mapping is being performed for one value (e.g., 4) of the numbers of multiple PRACH transmissions (i.e., one RO group size), and if only two remaining/spare ROs remain for an $n_{RA}$ value, the UE may not map such ROs to an RO group of size 4 (i.e., UE may not map such ROs to a number of 4 PRACH transmissions) and may not map such ROs to any number of multiple PRACH transmissions (i.e., UE may not use such ROs for multiple PRACH transmissions).

According to certain example embodiments, if, during the mapping, for a certain $n_{RA}$ value there is a number of remaining/spare ROs within the reference time period, and such number of remaining/spare ROs is lower than the size of the RO group to be mapped to, the UE may map the remaining/spare ROs to the largest RO group size possible (among the configured values of multiple PRACH transmissions) among the RO group sizes smaller or equal than the number of remaining/spare ROs. For example, if the mapping is being performed across different numbers of multiple PRACH transmissions (i.e., different RO group sizes), and is in decreasing order of RO group size, and if after mapping ROs to an RO group size of 8 for an $n_{RA}$ value, only two ROs remain for such $n_{RA}$ value, the UE may map such ROs to an RO group of size 2 (i.e., UE may map such ROs to a number of 2 PRACH transmissions). Thus, in this case, even if the mapping is in decreasing order of RO group size and so after an RO group size of 8, an RO group size of 4 may need to be determined, the UE may skip the RO groups of size 4 and determine an RO group size of 2 since only two ROs are available for the $n_{RA}$ value and within the reference time period. The mapping may restart at the skipped value of RO group size (i.e., value of number of multiple PRACH transmissions) at the next $ri_{RA}$ value.

According to certain example embodiments, if, during the mapping, for a certain $n_{RA}$ value there is a number of remaining/spare ROs within the reference time period, and such number of remaining/spare ROs is lower than the size of the RO group to be mapped to, the UE may map the remaining/spare ROs to the RO group sizes (among the configured values of multiple PRACH transmissions) with a size smaller or equal than the number of remaining/spare ROs. For example, if the mapping is being performed across different numbers of multiple PRACH transmissions (i.e., different RO group sizes) and if one RO may be mapped to multiple values of the numbers of multiple PRACH transmissions, and if 4 remaining/spare ROs remain for a certain $n_{RA}$ value, the UE may map the 4 remaining ROs to an RO group of size 4 and 2 RO groups of size 2 (i.e., UE may map such ROs to a number of 2 and 4 PRACH transmissions).

According to other example embodiments, the remaining ROs within the reference time period in the $n_{RA}$ values not yet mapped after an integer number of mapping cycles of all RO group sizes may not be used for further mapping if the number of the remaining ROs does not allow for an entire mapping cycle of all RO group sizes. Each RO may be mapped to only one value (that may be different between the ROs) of multiple PRACH transmissions or to multiple values (that may be different between the ROs) of multiple PRACH transmissions. For example, if values {2, 4, 8} are configured for the value of the number of multiple PRACH transmissions, an entire mapping cycle is a mapping of ROs to each of the configured sizes of RO groups (i.e., valid ROs mapped to RO group of size 8, valid ROs mapped to RO group of size 4, and valid ROs mapped to RO group of size 2). Herein, the terminology RO and valid RO may be used interchangeably since only valid ROs can be used for RO groups and hence for multiple PRACH transmissions.

In certain example embodiments, the UE may be configured by the gNB for the mapping of ROs within a reference time period to RO groups (i.e., to values of number of multiple PRACH transmissions). For example, the UE may be configured for mapping of only separate ROs to RO groups of different sizes, for mapping of only shared ROs to RO groups of different sizes, or both for mapping of shared and separate ROs to RO groups of different sizes. If the UE is configured for the mapping of only separate or shared ROs to the RO groups of different sizes, the UE may determine RO groups for all numbers of multiple PRACH transmissions. If the UE is configured for mapping both shared and separate ROs to RO groups of different sizes, the UE may map ROs to RO groups of only one size, such as, for example, to only one value of the number of multiple PRACH transmissions (i.e., the one determined via SSB-reference signal received power (RSRP) thresholds). According to certain example embodiments, once the mapping and use of ROs described above are completed, the UE may perform transmission of a number of multiple PRACH transmissions with a next available RO group for a number of multiple PRACH transmissions.

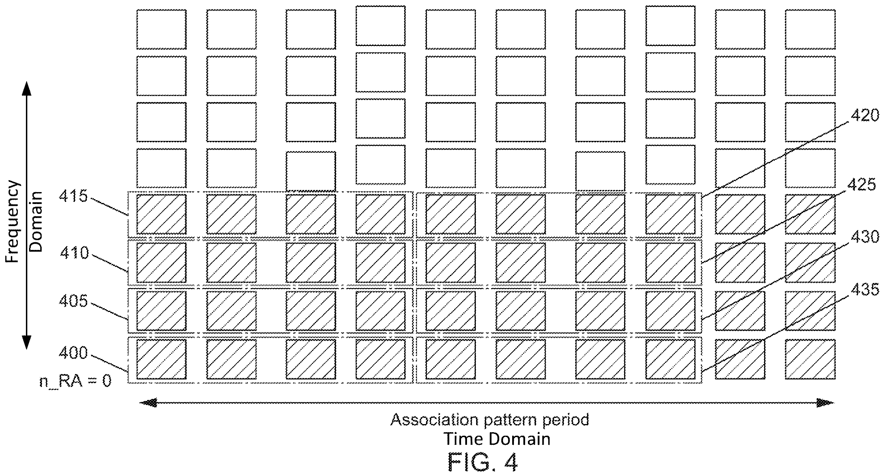

FIG. 4 illustrates an example RO group determination (i.e., mapping of ROs to RO groups) within a reference time period for a number of 4 PRACH transmissions, according to certain example embodiments. For instance, the UE may determine the RO groups of size 4 (i.e., for 4 PRACH transmissions) within a reference time period of a duration of one association pattern period. As illustrated in FIG. 4, two SSB indexes are mapped to a grid of valid ROs with parameters SSB-per-RO = 1/4 and Msg1-FDM = 8. Although FIG. 4 focuses on one SSB index (selected SSB index at the UE) shown with filled-in boxes, certain example embodiments are not limited to the example embodiment illustrated in FIG. 4.

According to the example embodiment of FIG. 4, the UE may be configured with 3 SSB-RSRP thresholds defining three different numbers of multiple PRACH transmissions {2, 4, 8} (i.e., 2 PRACH transmissions, 4 PRACH transmissions, and 8 PRACH transmissions). The UE may also measure a SSB-RSRP for a selected SSB index, compare the measured SSB-RSRP to the configured thresholds, and determine that the UE needs to transmit a number of 4 PRACH transmissions. Once the UE completes the measurement of the SSB-RSRP and performs the comparison, the UE may determine the RO groups of size 4 within a reference time period among the valid configured ROs by mapping the valid ROs in RO groups of size 4 sequentially, first in the time domain, and then in the frequency domain.

In certain example embodiments, when determining the RO groups, the UE may start from the earliest RO in the reference time period at the lowest $n_{RA}$ for the SSB index selected by the UE. For instance, if the number of valid ROs for $n_{RA}$ = 0 is greater than or equal to 4, the UE may group the first 4 sequential ROs for $n_{RA}$ = 0, and determine a first RO group for 4 PRACH transmissions as shown in FIG. 4 by the lowest-left box 400. As illustrated in FIG. 4, each set of boxes 405, 410, 415, 420, 425, 430, and 435 is an RO group or a set of ROs for multiple (4 in this example) PRACH transmissions. In other example embodiments, when the number of remaining ROs within the reference time period for $n_{RA}$ = 0 after the first RO group is equal to 6 (as in FIG. 4), which is larger than 4, the UE may group the subsequent 4 sequential ROs for $n_{RA}$ = 0 into a second RO group 435 for 4 PRACH transmissions, as shown in FIG. 4 by the RO group 435. The number of remaining ROs within the reference time period for $n_{RA}$ = 0 after the second group 435 is equal to 2, which is smaller than 4. In this case, the UE may discard the 2 remaining ROs, and restart the grouping from the earliest RO in the reference time period at $n_{RA}$ = 1 (i.e., more generically the next $n_{RA}$ containing valid ROs for the selected SSB index).

In some example embodiments, if the number of valid ROs for $n_{RA}$ = 1 is larger or equal than 4, the UE may perform the same steps described above for $n_{RA}$ = 0 on the valid ROs in $n_{RA}$ = 1. If the number of valid ROs for $n_{RA}$ = 1 is less than 4, the UE may discard the ROs on $n_{RA}$ = 1, and restart the grouping from the earliest RO in the reference time period at $n_{RA}$ = 2 (i.e., more generically the next $n_{RA}$ containing valid ROs for the selected SSB index). The UE may perform the above procedures until all the ROs in the reference time period are either grouped or discarded for multiple PRACH transmissions. Once the UE completes the above procedures, the UE may select the next available RO group.

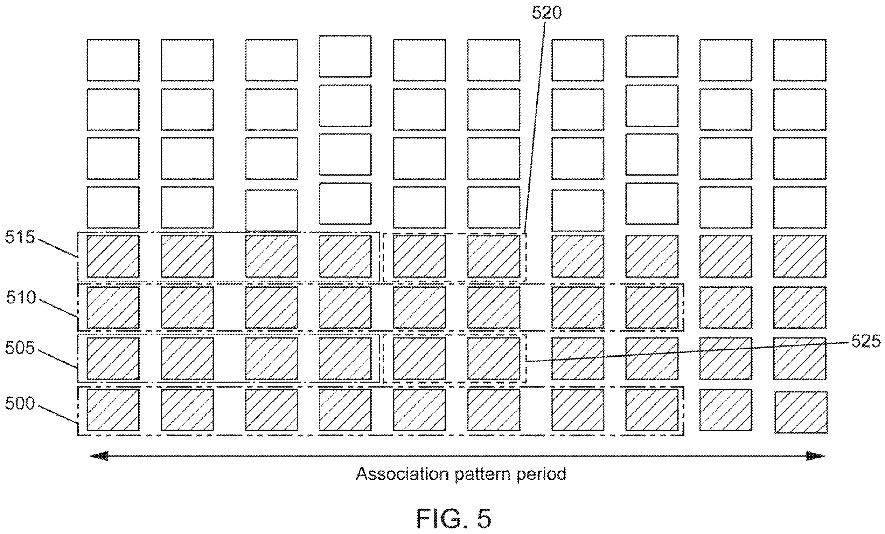

FIG. 5 illustrates an example RO group determination within a reference time period for multiple of the configured values for the number of multiple PRACH transmissions, according to certain example embodiments, in the case each RO is mapped to only one value (that may be different between the ROs) of multiple PRACH transmissions. According to the example embodiment of FIG. 5, the UE may be configured with values {2, 4, 8} for the number of multiple PRACH transmissions and may determine the RO groups of sizes {2, 4, 8} within a reference time period of a duration of one association pattern period. FIG. 5 illustrates two SSB indexes mapped to a grid of valid ROs with parameters SSB-per-RO = 1/4 and Msg1-FDM = 8. Although FIG. 5 focuses on one SSB index (selected SSB index at the UE) shown with hash-marked boxes, certain example embodiments are not limited to the example embodiment illustrated in FIG. 5.

According to the example embodiment of FIG. 5, the UE may be configured with 3 SSB-RSRP thresholds defining three different numbers of multiple PRACH transmissions {2, 4, 8}. The UE may also measure a SSB-RSRP for a selected SSB index, compare the measured SSB-RSRP to the configured thresholds, and determine that the UE needs to transmit a number of 4 PRACH transmissions. Once the UE completes the measurement of the SSB-RSRP and performs the comparison, the UE may determine the RO groups of all sizes {2, 4, 8} within a reference time period among the valid configured ROs for multiple PRACH transmissions and mapped to the selected SSB index. The determination may be performed by mapping ROs to RO groups of size {2, 4, 8} sequentially and in decreasing order, first in the time domain and then in the frequency domain.

In certain example embodiments, when determining the RO groups, the UE may start from the earliest RO in the reference time period at the lowest $n_{RA}$ for the SSB index selected by the UE. If the number of valid ROs for $n_{RA}$ = 0 is greater than or equal to 8, the UE may group the first 8 sequential ROs for $n_{RA}$ = 0, and determine a first RO group 500 for 8 PRACH transmissions. The number of remaining ROs within the reference time period for $n_{RA}$ = 0 after the first group is equal to 2, which is smaller than 4. In this case, the UE may discard the 2 remaining ROs, and restart the grouping from the earliest RO in the reference time period at $n_{RA}$ = 1 (i.e., in the next $n_{RA}$ containing valid ROs for the selected SSB index).

In other example embodiments, if the number of valid ROs for $n_{RA}$ = 1 is greater than or equal to 4, the UE may group the first 4 sequential ROs for $n_{RA}$ = 1, and determine a first RO group 505 for 4 PRACH transmissions on such valid ROs. In this example embodiment, if the number of valid ROs for $n_{RA}$ = 1 is less than 4, the UE may discard the ROs on $n_{RA}$ = 1, and restart the grouping from the first/earliest RO in the reference time period at $n_{RA}$ = 2 (i.e., in the next $n_{RA}$ containing valid ROs for the selected SSB index). The number of remaining ROs within the reference time period for $n_{RA}$ = 1 after the first group of size 4 is equal to 6, which is greater than 2. In this case, the UE may group the subsequent 2 sequential ROs for $n_{RA}$ = 1 into a group size 2 525. At this point, the UE may perform the same procedure as the steps described above from

$n_{RA}$ = 1, as also shown in FIG. 5 with RO groups 510, 515 and 520. The UE may also perform the above steps until all the ROs in the reference time period are either grouped or discarded for multiple PRACH transmissions. Once the UE completes the above-described steps the UE may select the next available RO group of size 4, and transmit the multiple (e.g., 4) PRACH transmissions with a preamble randomly selected within the preambles for 4 PRACH transmissions.

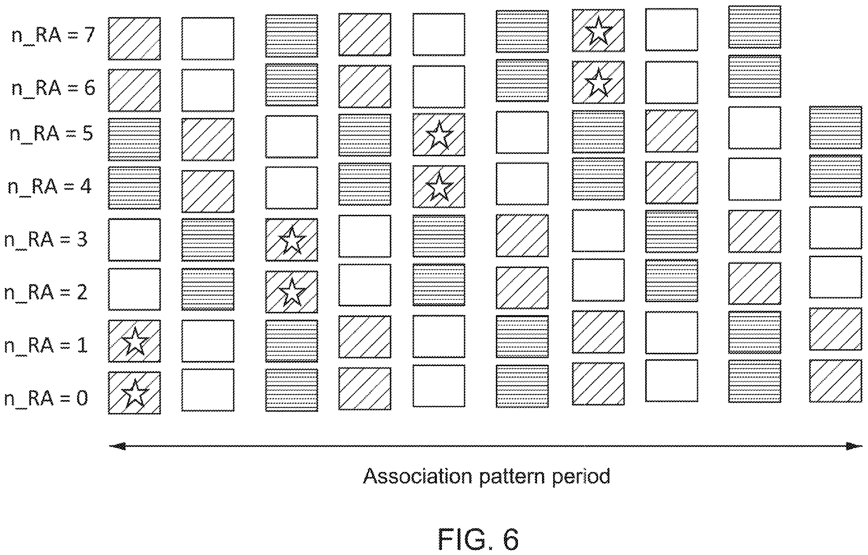

FIG. 6 illustrates an example implementation of a first/starting RO determination within a reference time period for 4 PRACH transmissions, according to certain example embodiments. A first/starting RO is a first/starting RO of an RO group for a value of the number of multiple PRACH transmissions. According to the example embodiment of FIG. 6, the UE may determine the first/starting ROs (illustrated as boxes with a star inside) for RO groups of size 4 (i.e., for 4 PRACH transmissions) within a reference time period of a duration of one association pattern period. FIG. 6 illustrates three SSB indexes mapped to a grid of valid ROs with parameters SSB-per-RO = 1/2 and Msg1-FDM = 8. Although FIG. 6 focuses on one SSB index (selected SSB index at the UE), certain example embodiments are not limited to the example embodiment illustrated in FIG. 6.

According to the example embodiment of FIG. 6, the UE may be configured with 3 SSB-RSRP thresholds defining three different numbers of multiple PRACH transmissions {2, 4, 8}. The UE may also measure a certain SSB-RSRP for a selected SSB index, compare the measured SSB-RSRP to the configured thresholds, and determine that the UE needs to transmit a number of 4 PRACH transmissions. After the comparison, the UE may determine the first/starting ROs of RO groups of size 4 within a reference time period among the valid configured ROs, based on a determined or configured periodicity value, first in the time domain and then in the frequency domain.

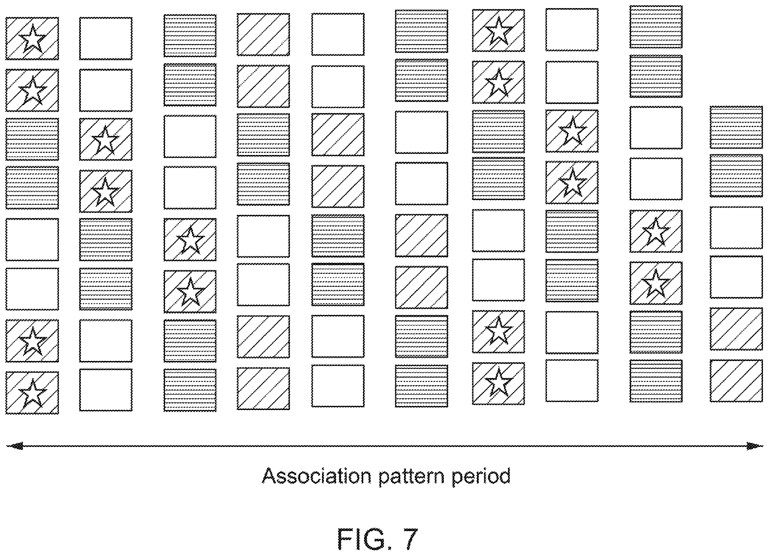

In the example embodiment of FIG. 6, starting from the first/earliest RO in the reference time period at the lowest $n_{RA}$ for the SSB index selected by the UE, the UE may determine the first/starting ROs for multiple PRACH transmissions with a configured or determined periodicity (in FIG. 6, the periodicity is 4 ROs mapped to the same selected SSB index), until the UE arrives at the last RO at the higher $n_{RA}$ value for the selected SSB index in the reference time period (n_RA = 7 in Fig.6). In other example embodiments, the determination of the first/starting ROs may be performed per $n_{RA}$ value, as illustrated in FIG. 7 for a periodicity of 2 ROs. In particular, FIG. 7 illustrates an example alternative implementation of the first/starting RO determination within a reference time period for 2 PRACH transmissions, according to certain example embodiments.

With the approach of the example embodiment illustrated in FIG. 6 or FIG. 7, the determined first/starting ROs may be candidate first/starting ROs since not all of them may be suitable for generation of RO groups of the required size (i.e., for a number of multiple PRACH transmissions) within the reference time period. For example, all of the determined first/starting ROs in FIG. 6 except for the first two (first boxes at n_RA = 0 and n_RA = 1) may not be suitable for 4 PRACH transmissions within the reference time period. In such a case, the candidate first/starting ROs may be dropped and not used for RO group generation. Once the above-described procedures for determining the first/starting ROs are completed, the UE may select the next suitable candidate first/starting RO and corresponding RO group, for transmission of the multiple PRACH transmissions.

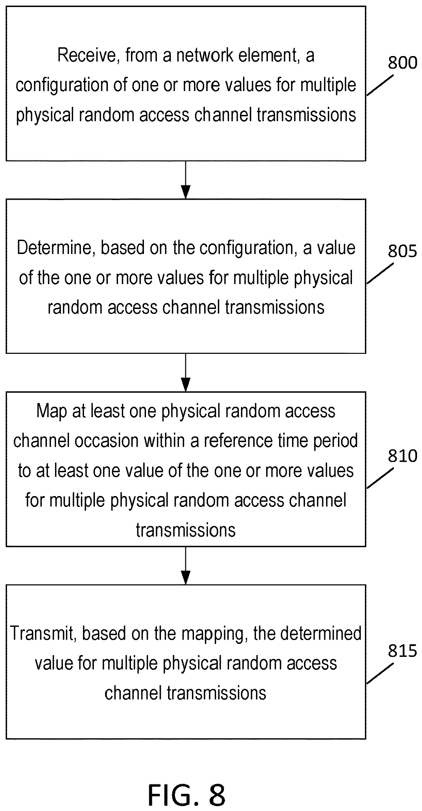

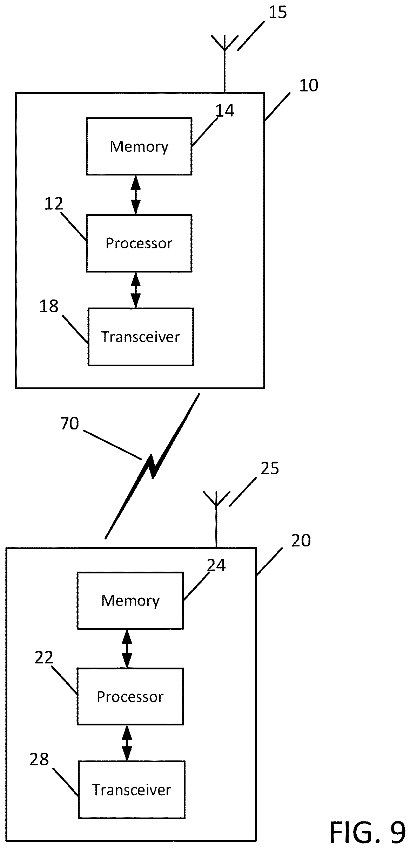

FIG. 8 illustrates an example flow diagram of a method, according to certain example embodiments. In an example embodiment, the method of FIG. 8 may be performed by a network entity, or a group of multiple network elements in a 3GPP system, such as LTE or 5G-NR. For instance, in an example embodiment, the method of FIG. 8 may be performed by a UE similar to one of apparatuses 10 or 20 illustrated in FIG. 9.

According to certain example embodiments, the method of FIG. 8 may include, at 800, receiving, from a network element, a configuration of one or more values for multiple physical random access channel transmissions. The method may also include, at 805, determining, based on the configuration, a value of the one or more values for multiple physical random access channel transmissions. The method may further include, at 810, mapping at least one physical random access channel occasion within a reference time period to at least one value of the one or more values for multiple physical random access channel transmissions. In addition, the method may include, at 815, transmitting, based on the mapping, the determined value for multiple physical random access channel transmissions.

According to certain example embodiments, the method may also include determining, based on the mapping, one or more physical random access channel occasion groups for at least one of the one or more values for multiple physical random access channel transmissions. According to some example embodiments, the method may further include receiving, from a network element, a configuration of one or more synchronization signal block reference signal received power thresholds corresponding to the one or more values for multiple physical random access channel transmissions. According to other example embodiments, the method may also include measuring a synchronization signal block reference signal received power. According to further example embodiments, the method may include selecting a synchronization signal block index based on the measuring. In certain example embodiments, the method may also include comparing the measured synchronization signal block reference received power of the selected synchronization signal block index to the synchronization signal block reference signal received power thresholds. In other example embodiments, the method may further include determining, based on the comparison, the value of the one or more values for multiple physical random access channel transmissions.

According to certain example embodiments, the at least one physical random access channel occasion may be determined based on a mapping of the at least one physical random access channel occasion within a reference time period. According to some example embodiments, the mapping may be performed sequentially first in a time domain and then in a frequency domain, and the mapping may be performed within the reference time period, starting from the earliest physical random access channel occasion within the reference time period at a lowest frequency location for the selected synchronization signal block index. According to other example embodiments, the mapping may be performed in the frequency domain and then in the time domain. According to further example embodiments, the mapping may be performed across different values of the one or more values for the multiple physical random access channel transmissions. According to other example embodiments, the mapping may be performed in decreasing order of physical random access occasion group size. According to some example embodiments, the mapping may be performed in increasing order of physical random access occasion group size.

In certain example embodiments, when a number of remaining physical random access channel occasions within a reference time period for a frequency location are to be mapped to a value of the one or more values for multiple physical random access channel transmissions, and the number of remaining physical random access channel occasions is lower than the value, the method may further include not mapping the remaining physical random access channel occasions to any of the one or more values for multiple physical random access channel transmissions. In some example embodiments, when the number of remaining physical random access channel occasions within the reference time period is lower than a size of a group of the plurality of physical random access channel occasions to be determined, the method may also include mapping the remaining physical random access channel occasions to at least one value of the one or more values for multiple physical random access channel transmissions, the at least one value smaller than or equal to the number of remaining physical random access channel occasions. In some example embodiments, the mapping may be performed across different values for the multiple physical random access channel transmissions, and a group of a maximum number of physical random access channel occasions may be determined based on a number of available physical random access channel occasions for a frequency location.

According to certain example embodiments, a number of remaining physical random access channel occasions within a reference time period after an integer number of mapping to the at least one value of the one or more values for multiple physical random access channel transmissions may not be used for further mapping when the number of the remaining physical random access channel occasions does not allow for an entire mapping to the at least one value of the one or more values for multiple physical random access channel transmissions. According to some example embodiments, the method may further include receiving, from the network element, configuration for determining the mapping of at least one physical random access channel occasion within a reference time period to at least one value of the one or more values for multiple physical random access channel transmissions. According to other example embodiments, the determination of the mapping may include determining whether the at least one value of the one or more values for multiple physical random access channel transmissions is only one value of the one or more values for multiple physical random access channel transmissions or one or more values of the one or more values for multiple physical random access channel transmissions.

FIG. 9 illustrates a set of apparatuses 10 and 20 according to certain example embodiments. In certain example embodiments, apparatuses 10 and 20 may be elements in a communications network or associated with such a network. For example, apparatus 10 may be a UE or other similar radio communication computer device, and apparatus 20 may be a network (i.e., gNB).

In some example embodiments, apparatuses 10 and 20 may include one or more processors, one or more computer-readable storage medium (for example, memory, storage, or the like), one or more radio access components (for example, a modem, a transceiver, or the like), and/or a user interface. In some example embodiments, apparatuses 10 and 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatuses 10 and 20 may include components or features not shown in FIG. 9.

As illustrated in the example of FIG. 9, apparatuses 10 and 20 may include or be coupled to a processors 12 and 22 for processing information and executing instructions or operations. Processors 12 and 22 may be any type of general or specific purpose processor. In fact, processors 12 and 22 may include one or more of general-purpose computers, special purpose computers, microprocessors, DSPs, field-programmable gate arrays (FPGAs), application-specific integrated circuits (ASICs), and processors based on a multi-core processor architecture, as examples. While a single processors 12 and 22 is shown in FIG. 9, multiple processors may be utilized according to other example embodiments. For example, it should be understood that, in certain example embodiments, apparatuses 10 and 20 may include two or more processors that may form a multiprocessor system (e.g., in this case processors 12 may represent a multiprocessor) that may support multiprocessing. According to certain example embodiments, the multiprocessor system may be tightly coupled or loosely coupled (e.g., to form a computer cluster).

Processors 12 and 22 may perform functions associated with the operation of apparatuses 10 and 20 including, as some examples, precoding of antenna gain/phase parameters, encoding and decoding of individual bits forming a communication message, formatting of information, and overall control of the apparatuses 10 and 20, including processes and examples illustrated in FIGs. 1-8.

Apparatuses 10 and 20 may further include or be coupled to a memories 14 and 24 (internal or external), which may be respectively coupled to processors 12 and 24 for storing information and instructions that may be executed by processors 12 and 24. Memories 14 and 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memories 14 and 24 can be comprised of any combination of random access memory (RAM), read only memory (ROM), static storage such as a magnetic or optical disk, hard disk drive (HDD), or any other type of non-transitory machine or computer readable media. The instructions stored in memories 14 and 24 may include program instructions or computer program code that, when executed by processors 12 and 22, enable the apparatuses 10 and 20 to perform tasks as described herein.

In certain example embodiments, apparatuses 10 and 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 12 and 22 and/or apparatuses 10 and 20 to perform any of the methods and examples illustrated in FIGs. 1-8.

In some example embodiments, apparatuses 10 and 20 may also include or be coupled to one or more antennas 15 and 25 for receiving a downlink signal and for transmitting via an UL from apparatuses 10 and 20. Apparatuses 10 and 20 may further include a transceivers 18 and 28 configured to transmit and receive information. The transceivers 18 and 28 may also include a radio interface (e.g., a modem) coupled to the antennas 15 and 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an UL.

For instance, transceivers 18 and 28 may be configured to modulate information on to a carrier waveform for transmission by the antennas 15 and 25 and demodulate information received via the antenna 15 and 25 for further processing by other elements of apparatuses 10 and 20. In other example embodiments, transceivers 18 and 28 may be capable of transmitting and receiving signals or data directly. Additionally or alternatively, in some example embodiments, apparatus 10 may include an input and/or output device (I/O device). In certain example embodiments, apparatuses 10 and 20 may further include a user interface, such as a graphical user interface or touchscreen.

In certain example embodiments, memories 14 and 34 store software modules that provide functionality when executed by processors 12 and 22. The modules may include, for example, an operating system that provides operating system functionality for apparatuses 10 and 20. The memory may also store one or more functional modules, such as an application or program, to provide additional functionality for apparatuses 10 and 20. The components of apparatuses 10 and 20 may be implemented in hardware, or as any suitable combination of hardware and software. According to certain example embodiments, apparatuses 10 and 20 may optionally be configured to communicate each other (in any combination) via a wireless or wired communication links 70 according to any radio access technology, such as NR.

According to certain example embodiments, processors 12 and 22 and memories 14 and 24 may be included in or may form a part of processing circuitry or control circuitry. In addition, in some example embodiments, transceivers 18 and 28 may be included in or may form a part of transceiving circuitry.

For instance, in certain example embodiments, apparatus 10 may be controlled by memory 14 and processor 12 to receive, from a network element, a configuration of one or more values for multiple physical random access channel transmissions. Apparatus 10 may also be controlled by memory 14 and processor 12 to determine, based on the configuration, a value of the one or more values for multiple physical random access channel transmissions. Apparatus 10 may further be controlled by memory 14 and processor 12 to map at least one physical random access channel occasion within a reference time period to at least one value of the one or more values for multiple physical random access channel transmissions. In addition, apparatus 10 may be controlled by memory 14 and processor 12 to transmit, based on the mapping, the determined value for multiple physical random access channel transmissions.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for receiving, from a network element, a configuration of one or more values for multiple physical random access channel transmissions. The apparatus may also include means for determining, based on the configuration, a value of the one or more values for multiple physical random access channel transmissions. The apparatus may further include means for mapping at least one physical random access channel occasion within a reference time period to at least one value of the one or more values for multiple physical random access channel transmissions. In addition, the apparatus may include means for transmitting, based on the mapping, the determined value for multiple physical random access channel transmissions.

Certain example embodiments described herein provide several technical improvements, enhancements, and /or advantages. For instance, in some example embodiments, it may be possible to provide a way to determine RO groups or first/starting ROs within a reference time period. Such determination may enable a UE and gNB to have the same understanding of when (in the time domain and the frequency domain) multiple PRACH transmissions may be transmitted.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

Partial Glossary:

| | |
|---|---|
| 3GPP | 3rd Generation Partnership Project |
| 5G | 5th Generation |
| 5GCN | 5G Core Network |
| 5GS | 5G System |
| BS | Base Station |
| DL | Downlink |
| eNB | Enhanced Node B |
| E-UTRAN | Evolved UTRAN |
| FDM | Frequency Domain Multiplexing |
| FH | Frequency Hopping |
| FR1 | Frequency Range 1 |
| FR2 | Frequency Range 2 |
| gNB | 5G or Next Generation NodeB |
| LTE | Long Term Evolution |
| Msg1 | Message 1 |
| NR | New Radio |
| PRACH | Physical Random Access Channel |

RACH        Random Access Channel
RO          PRACH Occasion
RSRP        Reference Signal Received Power
SIB1        System Information Block 1
SS/PBCH     Synchronization Signal/Physical Broadcast Channel
SSB         Synchronization Signal Block
UE          User Equipment
UL          Uplink

**Claims**

1.  A method comprising:

    receiving, from a network element, a configuration of one or more values for multiple physical random access channel transmissions;
    determining, based on the configuration, a value of the one or more values for multiple physical random access channel transmissions;
    mapping at least one physical random access channel occasion within a reference time period to at least one value of the one or more values for multiple physical random access channel transmissions; and
    transmitting, based on the mapping, the determined value for multiple physical random access channel transmissions.

2.  A non-transitory computer readable medium comprising program instructions stored thereon for performing the method according to claim 1.

3.  An apparatus, comprising:

    means for receiving, from a network element, a configuration of one or more values for multiple physical random access channel transmissions;
    means for determining, based on the configuration, a value of the one or more values for multiple physical random access channel transmissions;
    means for mapping at least one physical random access channel occasion within a reference time period to at least one value of the one or more values for multiple physical random access channel transmissions; and
    means for transmitting, based on the mapping, the determined value for multiple physical random access channel transmissions.

4.  The apparatus according to claim 3, further comprising:
    means for determining, based on the mapping, one or more physical random access channel occasion groups for at least one of the one or more values for multiple physical random access channel transmissions.

5.  The apparatus according to claim 3 or 4, further comprising:

    means for receiving, from a network element, a configuration of one or more synchronization signal block reference signal received power thresholds corresponding to the one or more values for multiple physical random access channel transmissions;
    means for measuring a synchronization signal block reference signal received power;
    means for selecting a synchronization signal block index based on the measuring;
    means for comparing the measured synchronization signal block reference received power of the selected synchronization signal block index to the synchronization signal block reference signal received power thresholds; and
    means for determining, based on the comparison, the value of the one or more values for multiple physical random access channel transmissions.

6.  The apparatus according to any of claims 3-5, wherein the at least one physical random access channel occasion is determined based on a mapping of the at least one physical random access channel occasion within a reference time period.

7.  The apparatus according to any of claims 3-6,

wherein the mapping is performed sequentially first in a time domain and then in a frequency domain, and wherein the mapping is performed within the reference time period, starting from the earliest physical random access channel occasion within the reference time period at a lowest frequency location for the selected synchronization signal block index.

8.  The apparatus according to any of claims 3-6, wherein the mapping is performed in a frequency domain and then in a time domain.

9.  The apparatus according to any of claims 3-6, wherein the mapping is performed across different values of the one or more values for the multiple physical random access channel transmissions.

10. The apparatus according to claim 9, wherein the mapping is performed in decreasing order of physical random access occasion group size.

11. The apparatus according to claim 9, wherein the mapping is performed in increasing order of physical random access occasion group size.

12. The apparatus according to any of claims 3-11,
    wherein when a number of remaining physical random access channel occasions within a reference time period for a frequency location are to be mapped to a value of the one or more values for multiple physical random access channel transmissions, and the number of remaining physical random access channel occasions is lower than the value, the apparatus further comprises:
    means for not mapping the remaining physical random access channel occasions to any of the one or more values for multiple physical random access channel transmissions.

13. The apparatus according to claim 12, wherein when the number of remaining physical random access channel occasions within the reference time period is lower than a size of a group of the plurality of physical random access channel occasions to be determined, the apparatus further comprises:
    means for mapping the remaining physical random access channel occasions to at least one value of the one or more values for multiple physical random access channel transmissions, the at least one value smaller than or equal to the number of remaining physical random access channel occasions.

14. The apparatus according to any of claims 3-13, wherein a number of remaining physical random access channel occasions within a reference time period after an integer number of mapping to the at least one value of the one or more values for multiple physical random access channel transmissions are not used for further mapping when the number of the remaining physical random access channel occasions does not allow for an entire mapping to the at least one value of the one or more values for multiple physical random access channel transmissions.

15. The apparatus according to any of claims 3-14, further comprising:

    means for receiving, from the network element, configuration for determining the mapping of at least one physical random access channel occasion within a reference time period to at least one value of the one or more values for multiple physical random access channel transmissions,
    wherein the determination of the mapping comprises determining whether the at least one value of the one or more values for multiple physical random access channel transmissions is only one value of the one or more values for multiple physical random access channel transmissions or one or more values of the one or more values for multiple physical random access channel transmissions.

FIG. 1

| PRACH Configuration Index | Preamble format | $n_{SFN} \bmod x = y$ | | Subframe number | Starting symbol | Number of PRACH slots within a subframe | ? number of time-domain PRACH occasions within a PRACH slot | ? PRACH duration |
|---|---|---|---|---|---|---|---|---|
| | | $x$ | $y$ | | | | | |
| 251 | C2 | 1 | 0 | 2,7 | 0 | 2 | 2 | 6 |

$\{0,1\}$  $\{0,1\}$

$$\boxed{l} = l_0 + 14n_{slot}^{RA} + n_t^{RA}N_{dur}^{RA}$$
$$= 0 + 14\times\{0,1\} + \{0,1\}\times6$$
$$= \{0, 6, 14, 20\}$$

SFN 0

SFN 1

Frame: 10ms

Frame: 10ms

| 0 | 1 | 2 | 3 | 4 | 5 | 6 | 7 | 8 | 9 | 10 | 0 | 1 | 2 | 3 | 4 | 5 | 6 | 7 | 8 | 9 | 10 |

| 0 | 1 | 2 | 3 | 4 | 5 | 6 | 7 | 8 | 9 | 10 | 11 | 12 | 13 | 14 | 15 | 16 | 14 | 18 | 19 | 20 | 21 | 22 | 23 | 24 | 25 | 26 | 27 |

Subframe: 1ms

Slot: 0.5ms

FIG. 2

One frame (10ms)

| Subframe # | 0 | 1 | 2 | 3 | 4 | 5 | 6 | 7 | 8 | 9 |
|---|---|---|---|---|---|---|---|---|---|---|

Slot: D D D S U D D D S U D D D S U D D D S U

$n_{RA} = 1$

| RO#1 SSB# 0 | RO#3 SSB# 1 | RO#5 SSB# | RO#7 SSB# |
|---|---|---|---|

$n_{RA} = 0$

| RO#0 SSB# 0 | RO#2 SSB# 1 | RO#4 SSB# 2 | RO#6 SSB# 3 |
|---|---|---|---|

f

t

FIG. 3

Association pattern period
Time Domain
FIG. 4

Association pattern period

FIG. 5

Association pattern period

FIG. 6

Association pattern period

FIG. 7

Receive, from a network element, a configuration of one or more values for multiple physical random access channel transmissions — 800

Determine, based on the configuration, a value of the one or more values for multiple physical random access channel transmissions — 805

Map at least one physical random access channel occasion within a reference time period to at least one value of the one or more values for multiple physical random access channel transmissions — 810

Transmit, based on the mapping, the determined value for multiple physical random access channel transmissions — 815

FIG. 8

FIG. 9

Europäisches
Patentamt

European
Patent Office

Office européen
des brevets

# EUROPEAN SEARCH REPORT

Application Number

EP 24 18 5690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/085104 A1 (PARK DONG HYUN [JP]) 16 March 2023 (2023-03-16) * abstract * * paragraphs [0196] - [0197] * * paragraphs [0204] - [0217]; table 11 * * paragraphs [0235] - [0250], [0264] * ----- | 1-15 | INV. H04W74/0833 ADD. H04W72/21 H04W74/00 |
| X | US 2019/268947 A1 (ZHANG YUJIAN [CN] ET AL) 29 August 2019 (2019-08-29) * abstract * * paragraphs [0032] - [0038] * * paragraphs [0040] - [0044]; table 1 * ----- | 1-15 | |

**TECHNICAL FIELDS SEARCHED (IPC)**

H04W

The present search report has been drawn up for all claims

| Place of search | Date of completion of the search | Examiner |
|---|---|---|
| The Hague | 25 November 2024 | Jurca, Dan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................
& : member of the same patent family, corresponding
document

EPO FORM 1503 03.82 (P04C01)

EP 4 507 442 A1

## ANNEX TO THE EUROPEAN SEARCH REPORT
## ON EUROPEAN PATENT APPLICATION NO.

EP 24 18 5690

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | Publication date |
|---|---|---|---|
| US 2023085104 A1 | 16-03-2023 | CN 115516991 A | 23-12-2022 |
| | | EP 4145942 A1 | 08-03-2023 |
| | | KR 20210133423 A | 08-11-2021 |
| | | US 2023085104 A1 | 16-03-2023 |
| | | WO 2021221381 A1 | 04-11-2021 |
| US 2019268947 A1 | 29-08-2019 | NONE | |

EPO FORM P0459

For more details about this annex : see Official Journal of the European Patent Office, No. 12/82

25